# EUROPÄISCHE PATENTSCHRIFT

(11) **EP 1 155 585 B1**
(45) Veröffentlichungstag und Bekanntmachung des Hinweises auf die Patenterteilung: **02.01.2008**
(21) Anmeldenummer: 00916764.4
(22) Anmeldetag: 25.02.2000
(51) Int. Cl.: H04Q 7/32, H04Q 7/38

(54) **VERFAHREN ZUR STEUERUNG DER AUSWAHL VON BASISSTATIONEN IN EINEM ZELLULAREN FUNK-TELEKOMMUNIKATIONSSYSTEM**
METHOD FOR CONTROLLING THE SELECTION OF BASE STATIONS IN A CELLULAR RADIO TELECOMMUNICATIONS SYSTEM
PROCEDE DE COMMANDE DE LA SELECTION DE STATIONS DE BASE DANS UN SYSTEME DE TELECOMMUNICATION RADIO CELLULAIRE

(30) Priorität: 26.02.1999 DE 19908479
(43) Veröffentlichungstag der Anmeldung: 21.11.2001
(73) Patentinhaber: Siemens Enterprise Communications GmbH & Co. KG, 81379 München (DE)
(72) Erfinder: SCHULZ, Egon, D-80993 München (DE)
(74) Vertreter: Maier, Daniel Oliver
(86) Internationale Anmeldenummer: PCT/DE2000/000539
(87) Internationale Veröffentlichungsnummer: WO 2000/051378

(56) Entgegenhaltungen:
- EP-A- 0 781 064

## Beschreibung

Auf dem endgerätenahen Gebiet der Telekommunikation gewinnen Funkstrecken zunehmend an Bedeutung. Schnurlos-Telefone, Mobilfunkendgeräte und die drahtlose Anschlußtechnik "RLL" (Radio in the Local Loop) oder "WLL" (Wireless Local Loop) sind dafür bekannte Beispiele. Mit dem Ziel einen Standard für eine hochleistungsfähige und universelle Luftschnittstelle festzulegen, wurde auf Betreiben europäischer Unternehmen eine als "DECT" (Digital Enhanced (früher: European) Cordless Telecommunication) bekannte Luftschnittstelle definiert. Der DECT-Standard ist in den Dokumenten ETS (European Telecommunication Standard) 300 175-1, ...,9. Oktober 1992 des ETSI (European Telecommunication Standards Institute) beschrieben und aus diesem bekannt.

Ein DECT-System erlaubt maximal 120 simultane Verbindungen zwischen sogenannten Basisstationen und Mobilteilen - darunter werden im übrigen nicht nur mobile Endgeräte sondern wie z.B. bei der drahtlosen Anschlußtechnik "Radio in the Local Loop" auch stationäre, mit einer Basisstation über Luftschnittstelle korrespondierende Systemkomponenten verstanden, die den Funktionsumfang eines Mobilteils beinhalten - ,wobei maximal 10 Frequenzen zwischen 1,88 und 1,90 GHz zur Verfügung stehen und pro Frequenz maximal 12 gleichzeitige Duplex-Sprachverbindungen (Zeitschlitze, Sprachkanäle) realisierbar sind.

Im DECT-Standard ist ferner eine Zusammenarbeit "Interworking" zwischen DECT und "ISDN" (Integrated Services Digital Network) spezifiziert. Daher sind neben den für Sprachverbindungen erforderlichen Zeitschlitzen (Kanäle) mit 32kbit/s ("Full Slots") und 8kbit/s ("Half Slots") auch, zur Unterstützung von ISDN vorgesehene, Zeitschlitze mit 64kbit/s Übertragungsrate spezifiziert.

Es sind allgemein Basisstationen und entsprechende Mobilteile bekannt, die zur schnelleren Datenübertragung von zum Beispiel 64kbit/s bzw. zur Unterstützung des DECT/ISDN-Interworking, Übertragungsraten von sowohl 32kbit/s "Full Slots" als auch 64kbit/s "Double Slots" unterstützen; also damit bis zu 6 Kanäle mit einer Übertragungsrate von 64kbits/s - d.h. maximal 2 vollständige ISDN-Verbindungen bestehend aus zwei Basiskanälen "B-Kanal" mit je 64kbit/s und einem Steuerkanal mit 16kbit/s "D-Kanal" - zur Verfügung gestellt werden.

Aus dem DECT-Standard ist das "Scannen" der lokalen Funkeinrichtungen für die Ermittlung freier und belegter Kanäle bekannt, die von allen DECT-Geräten mindestens alle 30 s als Hintergrundprozess durchgeführt wird. Die so ermittelte Information wird in einer Liste "Received Signal Strength Indication" RSSI-Liste gespeichert, wobei freie Kanäle mit geringer Störung durch hohe Werte und besetzte Kanäle mit starker Störung durch niedrige Werte - für die spätere Auswahl - gekennzeichnet werden. Wird eine Funkzelle durch zwei Basisstationen mit funktechnischen Ressourcen versorgt oder decken diese Basisstationen teilweise einen gemeinsamen Funkversorgungsbereich (Überlappung von Funkzellen) ab, wobei die erste Basisstation nur "Full Slots" und die zweite Basisstation sowohl "Full Slots" als auch "Double Slots" unterstützt, benötigt eine Mobilstation, die "Full Slots" als auch "Double Slots" unterstützt und beispielsweise den Dienst der Sprachübertragung d.h. eine Übertragungsrate von 32kbits ("Full Slots") benötigt, eine Möglichkeit zu erfahren, welche Basisstation diesen Dienst zur Verfügung stellt.

Im Hinblick auf ein universelles Telekommunikationssystem "Universal Mobile Telecommunication System" UMTS ist es auch denkbar, daß zwei Basisstationen, die zwei unterschiedliche Telekommunikationssysteme, beispielsweise eine erste Basisstation einen DECT-Funkbereieh und eine zweite Basisstation einen "Global system Mobile" GSM-Funkbereich, versorgen, wobei sich die Funkversorgungsbereiche ganz oder teilweise für die Umsetzung des UMTS überlappen. Mobilteile, die beide Systeme unterstützen, benötigen daher ebenfalls eine Möglichkeit zur Unterscheidung dieser Basisstationen.

Der Erfindung liegt daher die Aufgabe zugrunde, ein Verfahren zur Steuerung der Auswahl von Basisstationen in einem zellularen Funk-Telekommunikationssystem anzugeben, bei dem die in den Punk-Telekommunikationasystam, insbesondere bei einem RLL- bzw. WLL-System, die zur Verfügung stehenden, funktechnischen Übertragungsreasourcen effektiv genutzt werden.

Aus der EP 0 781 064 A2 ist ein Multi-Mode-Mobilterminal bekannt, welches eine einzelne priorisierte Liste aller verfügbaren Netzwerke führt. Bin Zugang zu den unterschiedlichen Netzwerken erfolgt nutzerbedingt, wobei ein erster Zugangstyp vorgesehen ist, welcher ein automatischer Zugang ist, der wenig oder keine Nutzereinbeziehung erfordert, ein zweiter zugangstyp vorgesehen ist, der einen Zugang zu einem vom Nutzer spezifizierten Netzwerk ermöglicht und ein dritter Zugangstyp vorgesehen ist, bei dem auf Grundlage eines vom Nutzer spezifizierten Dienstes, welcher von zumindest einem Netzwerk unterstützt wird, ein Zugang zu einem dieser Netzwerke ermöglicht wird.

Diese Aufgabe wird durch die Merkmale des Patentanspruchs 1 gelöst.

Beim erfindungsgemäßen Verfahren - gemäß Anspruch 1 - wird in mindestens einer Funkzelle eines zellularen Funk-Telekommunikationssystems von mindestens einer Funkeinrichtung, die mindestens einen ersten Dienst und einen zweiten Dienst unterstützt, verbindungsrelevante Daten in mindestens einem Speicher gespeichert. Basisstationen signalisieren, welche Dienste sie jeweils unterstützen. Primärdatensätze von Basisstationen, die die Unterstützung des ersten Dienstes signalisieren, werden von der Punkeinrichtung in einer ersten Liste gespeichert und Sekundärdatensätze von Basisstationen, die die Unterstützung des zweiten Dienstes signalisieren, werden in der zweiten Liste gespeichert. Die verbindungerelevanten Daten werden also nach Diensten separiert in den Listen gespeichert. Bei Änderung der Signalisierung werden die Listen entsprechend aktualisiert - Anspruch 1.

Ein wesentlicher Vorteil des erfindungsgemäßen Verfahrens ist die nach unterstützten Diensten separierte Speicherung der Daten von mehreren Basisstationen, die sich als Alternative für die Unterstützung eines bestimmten Dienstes anbieten.

Wesentlicher Vorteil der Weiterbildung nach Anspruch 2 ist die Gewährleistung, daß ein Verbindungsaufbau zu der Basisstation mit den besten übertragungseigenschaften erfolgt.

Wesentlicher Vorteil der Weiterbildung nach Anspruch 3 ist eine Vereinfachung des Verfahrens, da die Strukturierung der Liste unabhängig von Messungen der Basisstationen durchgeführt wird.

Der wesentliche Vorteil der Weiterbildung nach Anspruch 4 ist die einfache und kostengünstige Implementierung des Verfahrens, da für die Bestimmung der Reihenfolge der Datensätze innerhalb einer Liste keine zusätzlichen Messungen bzw. das Auswerten von Daten notwendig sind.

Ein wesentlicher Vorteil der Weiterbildungen nach Anspruch 5 (ohne Pausenzeit) und Anspruch 6 (mit Pausenzeit) ist die Gewährleistung, daß eine Verbindung aufgebaut wird.

Weitere vorteilhafte Ausgestaltungen der Erfindung sind in den restlichen Unteransprüchen angegeben.

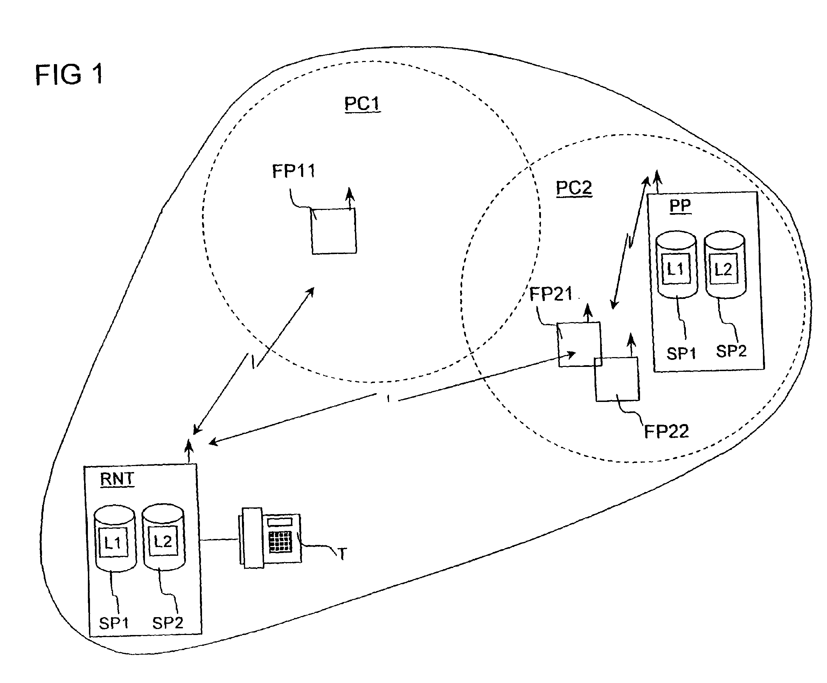

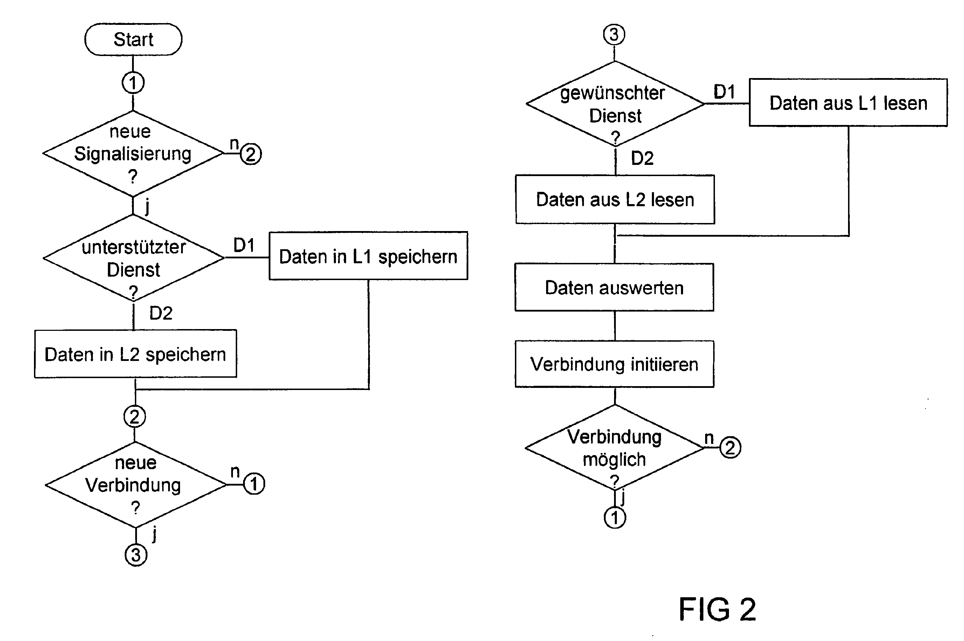

Ein Ausführungsbeispiel der Erfindung wird anhand der FIGUREN 1 und 2 erläutert. Dabei zeigen:
- FIGUR 1: ein Funk-Telekommunikationssystem mit Basisstationen, Mobilstationen und einer als Mobilstation ausgebildete Netzabschlußeinheit,
- FIGUR 2: ein Flußdiagramm des Verfahrens zur Auswahl von Basisstationen im Funk-Telekommunikationssystem nach FIGUR 1.

FIGUR 1 zeigt ein als DECT-System ausgebildetes Telekommunikationssystem mit als Pikozellen (Picocell) ausgebildeten Funkzellen PC1 und PC2. Die Übertragung von Informationen erfolgt jeweils über eine gemäß dem DECT-Standard ausgestaltete DECT-Luftschnittstelle, über welche durch eine Kombination von FDMA-, TDMA- und TDD-Zugriffsverfahren (Frequency Division Multiple Access / Time Division Multiple Access / Time Division Duplex) auf das drahtlose Übertragungsmedium "DECT-Funkkanal" zugegriffen wird. Hierbei stehen im Frequenzbereich zwischen 1880 MHz und 1900 MHz 10 Trägerfrequenzen mit einem Kanalabstand von jeweils 1,728 MHz zur Verfügung (FDMA), wobei der pro Träger festgelegte Zeitrahmen in 24 Zeitschlitze bzw. Kanäle - auch als "Slots" bezeichnet - eingeteilt ist (TDMA).

DECT-Festteile FP11, FP21, FP22 verwenden bei der Übertragung von Sprachdaten Zeitschlitze mit 32kbit/s Übertragungsrate (Full Slot), dies entspricht einem ersten Dienst D1. Zeitschlitze mit einer Übertragungsrate von 64kbit/s, dies entspricht dem zweiten Dienst D2 (Double Slot), werden von dem DECT-Festteil FP22 vor allem zur Übertragung von Paketdaten verwendet. Eine drahtlose Netzabschlußeinheit RNT, an dem ein Telefon T angeschlossen ist, sowie ein DECT-Mobilteil PP sind an den DECT-Festteilen FP11, FP21, FP22 über die DECT-Luftschnittstelle drahtlos anschließbar. Das DECT-Mobilteil PP sowie die drahtlose Netzabschlußeinheit RNT unterstützen ebenfalls den ersten Dienst D1 des DECT-Systems und den zweiten Dienst D2 des DECT-Systems. Das DECT-Mobilteil PP und die drahtlose Netzabschlußeinheit RNT speichern verbindungsrelevante Daten der DECT-Festteile FP11, FP12, FP21, FP22, die "Full Slots" verwenden, als Primärdatensätze in Form einer ersten Liste L1 in einem ersten Speicher SP1 und verbindungsrelevante Daten der DECT-Festteile FP11, FP12, FP21, FP22, die "Double Slots" verwenden, als Sekundärdatensätze in Form einer zweiten Liste L2 in einem zweiten Speicher SP2.

Alternativ ist es auch möglich, die Datensätze bzw. die Listen L1, L2 in einem einzigen Speicher zu speichern.

Eine alternative Ausführungsform des Funk-Telekommunikationssystems aus FIGUR 1 ist gegeben, wenn der erste Dienst D1 innerhalb einer ersten Funkzelle, die beispielsweise eine Funkreichweite gemäß dem DECT-Standard hat, und der zweite Dienst D2 innerhalb einer zweiten Funkzelle, die beispielsweise eine Funkreichweite nach dem GSM-Standard hat, zur Verfügung gestellt werden. Wobei der DECT-Funkversorgungsbereich teilweise oder ganz vom GSM-Funkversorgungsbereich abgedeckt wird, um eine Realisierung eines universellen Telekommunikationssystems, beispielsweise UMTS, zu ermöglichen. Bei dieser Ausführungsform kann der Fall auftreten, daß die Art der Daten die beim ersten Dienst D1 und beim zweiten Dienst D2 gleich sind, beispielsweise Sprachdaten, sich jedoch durch die unterschiedlichen Funkreichweiten der Funkzellen, in denen sie zur Verfügung gestellt werden, unterscheiden. Dann werden die Primär- und Sekundärdatensätze entsprechend der Funkreichweiten in die erste Liste L1 oder zweite Liste L2 gespeichert.

Für den Fall, daß sich die Art der beim ersten Dienst D1 und beim zweiten Dienst D2 übertragenen Daten unterscheiden (z.B. erster Dienst D1: Sprachdaten, zweiter Dienst D2: Paketdaten) und sie in Funkzellen mit unterschiedlichen Funkreichweiten zur Verfügung gestellt werden, können die Primär- und Sekundärdatensätze entsprechend der Funkreichweite oder aufgrund des zur Verfügung gestellten Dienstes D1, D2 in die erste Liste L1 oder zweite Liste L2 gespeichert werden.

In FIGUR 2 wird anhand eines Ablaufdiagramms das Verfahren zur Auswahl von Basisstationen beschrieben, das in einer Anordnung gemäß FIGUR 1 zwischen den DECT-Festteilen FP11, FP21, FP22 dem DECT-Mobilteil PP sowie der drahtlosen Netzabschlußeinheit RNT abläuft.

Im Ausgangszustand signalisieren erste DECT-Festteile FP21, FP22 dem DECT-Mobilteil PP und der drahtlosen Netzabschlußeinheit RNT, welchen Dienst D1, D2 sie unterstützen. Die drahtlose Netzabschlußeinheit RNT empfängt zusätzlich vom zweiten DECT-Festteil FP11 die Signalisierung des unterstützten Dienstes D1, D2. Im DECT-Mobilteil PP und der drahtlosen Netzabschlußeinheit RNT wird zunächst geprüft, ob eine Signalisierung stattgefunden hat, also eine Aktualisierung der betreffenden Liste(n) L1, L2 notwendig ist.

Ist dies der Fall, werden die Primärdatensätze von den die Unterstützung des ersten Dienstes D1 signalisierenden DECT-Festteilen FP11, FP21, FP22 in Form der ersten Liste L1 im Speicher SP1, SP2 gespeichert und/oder Sekundärdatensätze von den die Unterstützung des zweiten Dienstes D2 signalisierenden DECT-Festteilen FP11, FP21, FP22 in Form der zweiten Liste L2 im Speicher SP1, SP2 gespeichert. Die Reihenfolge der in den Listen L1, L2 gespeicherten oder zu speichernden Datensätze ergibt sich aus der Reihenfolge des Empfangs der Signalisierung.

Alternativ können die gespeicherten oder zu speichernden Datensätze innerhalb der Liste L1, L1 nach Obertragungseigenschaften der entsprechenden DECT-Festteile FP11, FP21, FP22 oder nach Ordnungskriterien, die sich an die Art der gespeicherten oder zu speichernden Datensätze orientieren z.B. alphabetisch oder numerisch, geordnet werden.

Ist dies nicht der Fall, also eine Aktualisierung nicht notwendig ist, so wird auf einen Verbindungswunsch gewartet.

Will das DECT-Mobilteil PP oder die drahtlose Netzabschlußeinheit RNT eine Telekommunikationsverbindung aufbauen, so wird zum Initiieren des Verbindungsaufbaus entsprechend dem benötigten Dienst D1, D2, jeweils ein erster Datensatz der Primär- oder Sekundärdatensatz aus der jeweiligen Liste L1, L2 ausgelesen. Aus dem Datensatz wird anschließend das zugehörige DECT-Festteil FP11, FP21, FP22 ermittelt und die Verbindung zu diesem DECT-Festteil FP11, FP21, FP22 aufgebaut. Kommt diese Verbindung nicht zustande, so wird ein zweiter (weiterer) Datensatz der Primär- oder Sekundärdatensätze aus der jeweiligen Liste L1, L2 ausgelesen und eine Verbindungsinitiierung gestartet. Existiert kein weiterer Datensatz innerhalb der Liste L1, L2, so wird wieder mit dem ersten Datensatz der Liste L1, L2 begonnen.

Alternativ dazu kann, wenn kein weiterer Datensatz vorhanden ist, nach einer vorgegebenen Pausenzeit, während derer der Telekommunikationsverbindungsaufbau kurzzeitig (temporär) nicht möglich ist (z.B. Unterbrechung des Telekommunikationsverbindungsaufbaus), erneut mit dem ersten Datensatz begonnen werden.

## Patentansprüche

1. Verfahren zur Steuerung der Auswahl von Basisstationen in einem zellularen Funk-Telekommunikationssystem, wobei
a) in mindestens einer Funkzelle (PC1, PC2) des Funk-Telekommunlkationssystems wird jeweils mindestens eine Basisstation (FP11, FP21, FP22) und mindestens eine Funkeinrichtung (PP, RNT) zum Zwecke der drahtlosen Telekommunikation betrieben,
b) die Funkeinrichtung (RNT; PP) unterstützt mindestens einen ersten Dienst (D1) und einen zweiten Dienst (D2),
c) die Funkeinrichtung (RNT; PP) speichert verbindungsrelevante Daten in mindestens einem Speicher (SP1, SP2),
d) Basisstationen (FP11, FP21, FP22) signalisieren der Funkeinrichtung (RNT, PP) in einer Systaminformation, welchen Dienst (D1, D2) sie unterstützen, **dadurch gekennzeichnet**, daes
e) die Funkeinrichtung (RNT, PP) Primardatensatze der Basisstationen [FP11, FP21, FP22) in Form einer ersten Liste (L1) in den Speicher (SP1, SP2) abspeichert, wenn die Basisstationen (FP11, FP21, FP22) der Funkeinrichtung (PP; RNT) in der systeminformation signalisieren, daß sie den ersten Dienst (D1) unterstutzen,
f) die Funkeinrichtung (RNT, PP) Sekundärzeichensätze der Basisstationen (FP11, FP21, FP22) in Form einer zweiten Liste (L2) abspeichert, wenn die Basisstationen (FP11, FP21, FP22) der Funkeinrichtung (PP; RNT) in der Systeminformation signalisieren; daß sie den zweiten Dienst (D2) unterstützen,
g) die Funkeinrichtung (RNT, PP) bei Änderung der Daten der Basisstationen (FP11, FP21, FP22) die erste Liste (L1) und/oder die zweite Liste (L2) aktualisiert.

2. Verfahren nach dem Anspruch 1,
**dadurch gekennzeichnet, daß**
die in den Listen (L1, L2) gespeicherten oder zu speichernden Datensätze der Basisstationen (FP11, FP21, FP22) nach Übertragungseigenschaften der Basisstationen (FP11, FP21, FP22) geordnet werden.

3. Verfahren nach dem Anspruch 1,
**dadurch gekennzeichnet, daß**
die in den Listen (L1,L2) gespeicherten oder zu speichernden Datensätze der Basisstationen (FP11, FP21, FP22) zumindest nach einem Ordnungskriterium geordnet werden, wobei das jeweilige Ordnungskriterium sich an die Art der gespeicherten oder zu speichernden Datensätzen orientiert.

4. Verfahren nach dem Anspruch 1,
**dadurch gekennzeichnet, daß**
die in den Listen (L1, L2) gespeicherten oder zu speichernden Datensätze der Basisstationen (FP11, FP21, FP22) in der Reihenfolge ihres Auftretens geordnet werden.

5. Verfahren nach einem der vorangegangenen Ansprüche,
**dadurch gekennzeichnet, daß**
a) die Funkeinrichtung (PP; RNT) einen ersten Datensatz der Primärdatensätze ausliest, wenn sie eine Telekommunikationsverbindung zu der Basisstation (FP11, FP21, FP22) aufbaut, die den ersten Dienst (D1) unterstützt,
b) die Funkeinrichtung (PP; RNT) einen ersten Datensatz der Sekundärdatensätze ausliest, wenn sie eine Telekommunikationsverbindung zu der Basisstation (FP11, FP21, FP22) aufbaut, die den zweiten Dienst (D2) unterstützt,
c) die Funkeinrichtung (RNT, PP) bei einem Scheitern des Verbindungsaufbaus in der jeweiligen Liste (L1, L2) einen zweiten Datensatz der Primär- oder Sekundärdatensätze ausliest und eine Verbindung zur entsprechenden Basisstation (FP11, FP21, FP22) aufbaut,
d) die Funkeinrichtung (RNT, PP), wenn noch kein Verbindungsaufbau zustande gekommen ist und der zweite Datensatz der letzte Datensatz in der jeweiligen Liste (L1, L2) gewesen ist, erneut mit dem Auslesen des ersten Datensatzes der Liste (L1, L2) beginnt.

6. Verfahren nach einem der vorangegangenen Ansprüche,
**dadurch gekennzeichnet, daß**
a) die Funkeinrichtung (PP; RNT) einen ersten Datensatz der Primärdatensätze ausliest, wenn sie eine Telekommunikationsverbindung zu der Basisstation (FP11, FP21, FP22) aufbaut, die den ersten Dienst (D1) unterstützt,
b) die Funkeinrichtung (PP; RNT) einen ersten Datensatz der Sekundärdatensätze ausliest, wenn sie eine Telekommunikationsverbindung zu der Basisstation (FP11, FP21, FP22) aufbaut, die den zweiten Dienst (D2) unterstützt,
c) die Funkeinrichtung (RNT, PP) bei einem Scheitern des Verbindungsaufbaus in der jeweiligen Liste (L1, L2) einen zweiten Datensatz der Primär- oder Sekundärdatensätze ausliest und eine Verbindung zur entsprechenden Basisstation (FP11, FP21, FP22) aufbaut,
d) die Funkeinrichtung (RNT, PP), wenn noch kein Verbindungsaufbau zustande gekommen ist und der zweite Datensatz der letzte Datensatz in der jeweiligen Liste (L1, L2) gewesen ist, nach Ablauf einer vorgegebenen Pausenzeit erneut mit dem Auslesen des ersten Datensatzes der jeweiligen Liste (L1, L2) beginnt.

7. Verfahren nach einem der vorhergehenden Ansprüche,
**dadurch gekennzeichnet,daß**
die Funkeinrichtung (RNT, PP) eine drahtlose Netzabschlußeinheit "Radio Network Termination" RNT ist.

8. Verfahren nach einem der vorangegangenen Ansprüche,
**dadurch gekennzeichnet, daß**
bei mehreren Funkzellen in dem Funk-Telekommunikationssystem den Funkzellen gleiche Funkreichweiten zugeordnet werden.

9. Verfahren nach Anspruch 8,
**dadurch gekennzeichnet, daß**
das Funk-Telekommunikationssystem nach dem DECT-Standard funktioniert.

10. Verfahren nach einem der Ansprüche 1 bis 7,
**dadurch gekennzeichnet, daß**
bei mehreren Funkzellen in dem Funk-Telekommunikationssystem den Funkzellen unterschiedliche Funkreichweiten zugeordnet werden.

11. Verfahren nach Anspruch 10,
**dadurch gekennzeichnet, daß**
das Funk-Telekommunikationssystem nach dem UMTS-Standard funktioniert.

12. Verfahren nach Anspruch 10 oder 11,
**dadurch gekennzeichnet, daß**
a) beim ersten Dienst (D1) und beim zweiten Dienst (D2) die gleiche Art von Daten übertragen wird,
b) der erste Dienst und der zweite Dienst in unterschiedlichen Funkzellen zur Verfügung gestellt werden.

13. Verfahren nach einem der Ansprüche 1 bis 11,
**dadurch gekennzeichnet, daß**
beim ersten Dienst (D1) und beim zweiten Dienst (D2) unterschiedliche Arten von Daten übertragen werden.

14. Verfahren nach Anspruch 13,
**dadurch gekennzeichnet, daß**
beim ersten Dienst (D1) Signale mit einer Übertragungsrate von 32kbit/s und beim zweiten Dienst (D2) Signale mit einer Übertragungsrate von 64kbit/s übertragen werden.

15. Verfahren nach Anspruch 13 oder 14,
**dadurch gekennzeichnet, daß**
beim ersten Dienst (D1) Sprache und beim zweiten Dienst (D2) Paketdaten übertragen werden.

## Claims

1. Method for controlling the selection of base stations in a cellular radio telecommunications system, wherein:
a) in at least one radio cell (PC1, PC2) of the radio telecommunications system, at least one base station (FP11, FP21, FP22) and at least one radio device (PP, RNT) are operated for the purposes of wireless telecommunication,
b) the radio device (RNT; PP) supports at least one first service (D1) and one second service (D2),
c) the radio device (RNT; PP) stores connection-relevant data in at least one memory (SP1, SP2),
d) base stations (FP11, FP21, FP22) signal to the radio device (RNT, PP), in system information, which service (D1, D2) they support, **characterized in that**
e) the radio device (RNT, PP) stores primary data records of the base stations (FP11, FP21, FP22) in the form of a first list (L1) in the memory (SP1, SP2), if the base stations (FP11, FP21, FP22) signal to the radio device (PP; RNT) in the system information that they support the first service (D1),
f) the radio device (RNT, PP) stores secondary character sets of the base stations (FP11, FP21, FP22) in the form of a second list (L2), if the base stations (FP11, FP21, FP22) signal to the radio device (PP; RNT) in the system information that they support the second service (D2),
g) the radio device (RNT, PP) updates the first list (L1) and/or the second list (L2) if the data of the base stations (FP11, FP21, FP22) are modified.

2. Method according to claim 1,
**characterized in that**
the data records of the base stations (FP11, FP21, FP22) stored or to be stored in the lists (L1, L2) are arranged according to transmission characteristics of the base stations (FP11, FP21, FP22).

3. Method according to claim 1,
**characterized in that**
the data records of the base stations (FP11, FP21, FP22) stored or to be stored in the lists (L1, L2) are arranged at least according to an ordering criterion, the respective ordering criterion being based on the type of data stored or to be stored.

4. Method according to claim 1,
**characterized in that**
the data records of the base stations (FP11, FP21, FP22) stored or to be stored in the lists (L1, L2) are arranged in the sequence of their occurrence.

5. Method according to one of the previous claims,
**characterized in that**
a) the radio device (PP; RNT) reads out a first data record of the primary data records when it sets up a telecommunications connection to the base station (FP11, FP21, FP22) which supports the first service (D1),
b) the radio device (PP; RNT) reads out a first data record of the secondary data records when it sets up a telecommunications connection to the base station (FP11, FP21, FP22) which supports the second service (D2),
c) the radio device (RNT, PP), if the connection set-up fails, reads out a second data record of the primary or secondary data records in the relevant list (L1, L2) and sets up a connection to the corresponding base station (FP11, FP21, FP22),
d) the radio device (RNT, PP), if no connection has yet been set up and the second data record was the last data record in the respective list (L1, L2), restarts the read-out of the first data record of the list (L1, L2).

6. Method according to one of the previous claims,
**characterized in that**
a) the radio device (PP; RNT) reads out a first data record of the primary data records when it sets up a telecommunications connection to the base station (FP11, FP21, FP22) which supports the first service (D1),
b) the radio device (PP; RNT) reads out a first data record of the secondary data records when it sets up a telecommunications connection to the base station (FP11, FP21, FP22) which supports the second service (D2),
c) the radio device (RNT, PP), if the connection set-up fails, reads out a second data record of the primary or secondary data records in the relevant list (L1, L2) and sets up a connection to the corresponding base station (FP11, FP21, FP22),
d) the radio device (RNT, PP), if no connection has yet been set up and the second data record was the last data record in the respective list (L1, L2), restarts the read-out of the first data record of the respective list (L1, L2) at the end of a predefined pause time.

7. Method according to one of the previous claims,
**characterized in that**
the radio device (RNT, PP) is a radio network termination RNT.

8. Method according to one of the previous claims,
**characterized in that**,
in the case of a plurality of radio cells in the radio telecommunications system, the same radio ranges are allocated to the radio cells.

9. Method according to claim 8,
**characterized in that**
the radio telecommunications system operates according to the DECT standard.

10. Method according to one of claims 1 to 7,
**characterized in that**,
in the case of a plurality of radio cells in the radio telecommunications system, different radio ranges are allocated to the radio cells.

11. Method according to claim 10,
**characterized in that**
the radio telecommunications system operates according to the UMTS standard.

12. Method according to claim 10 or 11,
**characterized in that**
a) the same type of data is transmitted in the first service (D1) and in the second service (D2),
b) the first service and the second service are made available in different radio cells.

13. Method according to one of claims 1 to 11,
**characterized in that**
different types of data are transmitted in the first service (D1) and in the second service (D2).

14. Method according to claim 13,
**characterized in that**
signals with a transmission rate of 32 kbit/s are transmitted in the first service (D1), and signals with a transmission rate of 64 kbit/s are transmitted in the second service (D2).

15. Method according to claim 13 or 14,
**characterized in that**
voice is transmitted in the first service (D1), and packet data are transmitted in the second service (D2).

## Revendications

1. Procédé de commande de la sélection de stations de base dans un système de télécommunication radio cellulaire,
a) au moins une station de base (FP11, FP21, FP22) et au moins un dispositif radio (PP, RNT) étant respectivement exploités dans au moins une cellule radio (PC1, PC2) du système de télécommunication radio aux fins de la télécommunication sans fil,
b) le dispositif radio (RNT; PP) supportant au moins un premier service (D1) et un deuxième service (D2),
c) le dispositif radio (RNT; PP) mettant en mémoire des données pertinentes pour la liaison dans au moins une mémoire (SP1, SP2),
d) des stations de base (FP11, FP21, FP22) signalant au dispositif radio (RNT, PP), dans une information système, quel service (D1, D2) elles supportent,
**caractérisé en ce que**
e) le dispositif radio (RNT, PP) met en mémoire des jeux de données primaires des stations de base (FP11, FP21, FP22) sous la forme d'une première liste (L1) dans la mémoire (SP1, SP2) lorsque les stations de base (FP11, FP21, FP22) du dispositif radio (PP; RNT) signalent, dans l'information système, qu'elles supportent le premier service (D1),
f) le dispositif radio (RNT, PP) met en mémoire des jeux de données secondaires des stations de base (FP11, FP21, FP22) sous la forme d'une deuxième liste (L2) lorsque les stations de base (FP11, FP21, FP22) du dispositif radio (PP; RNT) signalent, dans l'information système, qu'elles supportent le deuxième service (D2),
g) le dispositif radio (RNT, PP), en cas de modification des données des stations de base (FP11, FP21, FP22), met à jour la première liste (L1) et/ou la deuxième liste (L2).

2. Procédé selon la revendication 1, **caractérisé en ce que** les jeux de données des stations de base (FP11, FP21, FP22) mis en mémoire ou à mettre en mémoire dans les listes (L1, L2) sont classés selon des caractéristiques de transmission des stations de base (FP11, FP21, FP22).

3. Procédé selon la revendication 1, **caractérisé en ce que** les jeux de données des stations de base (FP11, FP21, FP22) mis en mémoire ou à mettre en mémoire dans les listes (L1, L2) sont classés au moins selon un critère d'ordre, le critère d'ordre respectif étant orienté sur le type des jeux de données mis en mémoire ou à mettre en mémoire.

4. Procédé selon la revendication 1, **caractérisé en ce que** les jeux de données des stations de base (FP11, FP21, FP22) mis en mémoire ou à mettre en mémoire dans les listes (L1, L2) sont classés dans l'ordre dans lequel ils se présentent.

5. Procédé selon l'une des revendications précédentes,
**caractérisé en ce que**
a) le dispositif radio (PP; RNT) extrait un premier jeu de données des jeux de données primaires lorsqu'il établit une liaison de télécommunication vers la station de base (FP11, FP21, FP22) qui supporte le premier service (D1),
b) le dispositif radio (PP; RNT) extrait un premier jeu de données des jeux de données secondaires lorsqu'il établit une liaison de télécommunication vers la station de base (FP11, FP21, FP22) qui supporte le deuxième service (D2),
c) le dispositif radio (RNT, PP), si l'établissement de la liaison échoue, extrait dans la liste respective (L1, L2) un deuxième jeu de données des jeux de données primaires ou secondaires et établit une liaison vers la station de base correspondante (FP11, FP21, FP22),
d) le dispositif radio (RNT, PP), s'il n'y a encore eu aucun établissement de liaison et si le deuxième jeu de données était le dernier jeu de données dans la liste respective (L1, L2), recommence à extraire le premier jeu de données de la liste (L1, L2).

6. Procédé selon l'une des revendications précédentes,
**caractérisé en ce que**
a) le dispositif radio (PP; RNT) extrait un premier jeu de données des jeux de données primaires lorsqu'il établit une liaison de télécommunication vers la station de base (FP11, FP21, FP22) qui supporte le premier service (D1),
b) le dispositif radio (PP; RNT) extrait un premier jeu de données des jeux de données secondaires lorsqu'il établit une liaison de télécommunication vers la station de base (FP11, FP21, FP22) qui supporte le deuxième service (D2),
c) le dispositif radio (RNT, PP), si l'établissement de la liaison échoue, extrait dans la liste respective (L1, L2) un deuxième jeu de données des jeux de données primaires ou secondaires et établit une liaison vers la station de base correspondante (FP11, FP21, FP22),
d) le dispositif radio (RNT, PP), s'il n'y a encore eu aucun établissement de liaison et si le deuxième jeu de données était le dernier jeu de données dans la liste respective (L1, L2), recommence à extraire le premier jeu de données de la liste respective (L1, L2) à l'expiration d'un temps de pause prédéterminé.

7. Procédé selon l'une des revendications précédentes, **caractérisé en ce que** le dispositif radio (RNT, PP) est une unité de terminaison de réseau sans fil «Radio Network Termination» RNT.

8. Procédé selon l'une des revendications précédentes, **caractérisé en ce que**, en cas de plusieurs cellules radio dans le système de télécommunication radio, des mêmes portées radio sont affectées aux cellules radio.

9. Procédé selon la revendication 8, **caractérisé en ce que** le système de télécommunication radio fonctionne selon le standard DECT.

10. Procédé selon l'une des revendications 1 à 7, **caractérisé en ce que**, en cas de plusieurs cellules radio dans le système de télécommunication radio, des portées radio différentes sont affectées aux cellules radio.

11. Procédé selon la revendication 10, **caractérisé en ce que** le système de télécommunication radio fonctionne selon le standard UMTS.

12. Procédé selon la revendication 10 ou 11, **caractérisé en ce que**
a) le même type de données est transmis dans le cas du premier service (D1) et dans le cas du deuxième service (D2),
b) le premier service et le deuxième service sont mis à disposition dans différentes cellules radio.

13. Procédé selon l'une des revendications 1 à 11, **caractérisé en ce que** différents types de données sont transmis dans le cas du premier service (D1) et dans le cas du deuxième service (D2).

14. Procédé selon la revendication 13, **caractérisé en ce que** sont transmis, dans le cas du premier service (D1), des signaux avec un débit de transmission de 32 kbits/s et, dans le cas du deuxième service (D2), des signaux avec un débit de transmission de 64 kbits/s.

15. Procédé selon la revendication 13 ou 14, **caractérisé en ce que** sont transmises la voix dans le cas du premier service (D1) et des données par paquets dans le cas du deuxième service (D2).
